(19) Europäisches Patentamt / European Patent Office / Office européen des brevets

(11) **EP 3 384 278 B1**

(12) **FASCICULE DE BREVET EUROPEEN**

(45) Date de publication et mention de la délivrance du brevet:
**28.02.2024 Bulletin 2024/09**

(21) Numéro de dépôt: **16806017.6**

(22) Date de dépôt: **29.11.2016**

(51) Classification Internationale des Brevets (IPC):
**G01N 23/225** *(2018.01)*

(52) Classification Coopérative des Brevets (CPC):
**G01N 23/225;** G01N 2223/305; G01N 2223/605

(86) Numéro de dépôt international:
**PCT/EP2016/079070**

(87) Numéro de publication internationale:
**WO 2017/093213 (08.06.2017 Gazette 2017/23)**

(54) **PROCEDE ET SYSTEME POUR LA GENERATION D'UN PROFIL THEORIQUE D'INTENSITES RETRODIFFUSEES D'UN MATERIAU POLYCRISTALLIN D'ORIENTATION CRISTALLINE CONNUE**

VERFAHREN UND SYSTEM ZUR ERZEUGUNG EINES THEORETISCHEN RÜCKSTREUINTENSITÄTSPROFILS EINES POLYKRISTALLINMATERIALS MIT BEKANNTER KRISTALLORIENTIERUNG

METHOD AND SYSTEM FOR GENERATING A THEORETICAL BACKSCATTERED INTENSITY PROFILE OF A POLYCRYSTALLINE MATERIAL WITH KNOWN CRYSTAL ORIENTATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.11.2015 FR 1561612**

(43) Date de publication de la demande:
**10.10.2018 Bulletin 2018/41**

(73) Titulaires:
- **Centre National de la Recherche Scientifique CNRS**
  **75794 Paris Cedex 16 (FR)**
- **Université Claude Bernard Lyon 1**
  **69100 Villeurbanne (FR)**
- **Institut National des Sciences Appliquées de Lyon**
  **69100 Villeurbanne (FR)**

(72) Inventeurs:
- **LANGLOIS, Cyril**
  **69003 Lyon (FR)**
- **DOUILLARD, Thierry**
  **69100 Villeurbanne (FR)**
- **DUBAIL, Sébastien**
  **74140 Sciez (FR)**

(74) Mandataire: **Be IP**
**Cabinet LTL SAS**
**Centre d'Entreprise et d'Innovation**
**56, Bd Niels Bohr**
**CS 52132**
**69603 Villeurbanne Cedex (FR)**

(56) Documents cités:
**FR-A1- 3 016 990**

- **C. LANGLOIS ET AL: "Crystal orientation mapping via ion channeling: An alternative to EBSD", ULTRAMICROSCOPY, vol. 157, 5 juin 2015 (2015-06-05), pages 65-72, XP055266074, NL ISSN: 0304-3991, DOI: 10.1016/j.ultramic.2015.05.023**
- **VASILISA VELIGURA ET AL: "Channeling in helium ion microscopy: Mapping of crystal orientation", BEILSTEIN JOURNAL OF NANOTECHNOLOGY, vol. 3, 10 juillet 2012 (2012-07-10), pages 501-506, XP055176507, DOI: 10.3762/bjnano.3.57**

- **RO CA D ET AL: "Area-preserving projections from hexagonal and triangular domains to the sphere and applications to electron back-scatter diffraction pattern simulations", MODELLING AND SIMULATION IN MATERIALS SCIENCE AND ENGINEERING, IOP PUBLISHING, BRISTOL, GB, vol. 21, no. 5, 11 June 2013 (2013-06-11), page 55021, XP020247229, ISSN: 0965-0393, DOI: 10.1088/0965-0393/21/5/055021**

**Description**

## DOMAINE TECHNIQUE

La présente invention concerne le domaine technique général de la caractérisation d'un échantillon en matériau poly-cristallin. Ces matériaux sont par exemple des céramiques, des métaux, etc.

## PRESENTATION DE L'ART ANTERIEUR

Un matériau poly-cristallin est un matériau solide constitué d'une pluralité de petits cristaux - appelés « grains » - de tailles et d'orientations cristallines variées, par opposition à un matériau monocristallin constitué d'un seul et unique cristal et un matériau amorphe sans ordre à longue distance.

La plupart des matériaux (dans le domaine de la microélectronique, des nouvelles énergies, des alliages, des céramiques, des minéraux) se composent de cristaux de taille, de forme et de structure différentes.

L'anisotropie des matériaux poly-cristallins a de multiples impacts sur leurs caractéristiques, notamment sur leurs propriétés mécaniques (résistance à la fissuration, à la rupture, etc.) ou encore sur leurs propriétés électriques.

La connaissance de l'orientation cristalline des grains composant un matériau poly-cristallin est donc très importante.

Le document WO2015113898 décrit un procédé de cartographie des orientations cristallines d'un échantillon en matériau poly-cristallin, le procédé comprenant :

- la réception d'une série d'images de l'échantillon acquises par un dispositif d'acquisition, les images étant acquises pour des géométries d'éclairage de l'échantillon différentes, chaque image incluant des pixels représentant des intensités de points de l'échantillon pour une géométrie d'éclairage respective,
- l'estimation d'au moins un profil d'intensités pour au moins un point considéré du matériau à partir de la série d'images, chaque profil d'intensités représentant l'intensité associée au point considéré en fonction de la géométrie d'éclairage,
- la détermination d'une orientation cristalline pour chaque point considéré du matériau en comparant le profil d'intensités associé audit point considéré à des signatures théoriques de profils d'intensités d'orientations cristallines connues contenus dans une base de données.

Ce procédé - basé sur la comparaison d'un profil d'intensités estimé à des signatures théoriques - est très efficace. Il permet une caractérisation des orientations cristallines d'un échantillon poly-cristallin qui est simple, rapide et peu coûteuse à mettre en oeuvre.

On connaît différentes méthodes d'obtention des signatures théoriques contenues dans la base de données.

Une première méthode consiste à mesurer expérimentalement l'intensité d'un cristal dont on connait l'orientation pour différentes géométries d'acquisition. Toutefois, cette méthode est très coûteuse en temps. Par exemple le document XP055266074 de C. LANGLOIS ET AL: "Crystal orientation mapping via ion channeling: An alternative to EBSD", ULTRAMICROSCOPY, vol. 157, 5 juin 2015, pages 65-72, décrit une méthode dans laquelle des signatures théoriques sont calculées pour chaque point d'un échantillon en utilisant un profil expérimental, une information sur les angles d'Euler au point considéré (obtenus par EBSD) et une information sur le système cristallin (i.e. cubique, orthorhombique, hexagonal, etc.) de l'échantillon (cf. XP055266074, page 67, colonne de droite, paragraphe 2).

Une autre méthode consiste à estimer les signatures théoriques à partir de modélisation en trois dimensions (3D). Par exemple, le document XP055176507 de VASILISA VELIGURA ET AL: "Channeling in hélium ion microscopy: Mapping of crystal orientation", BEILSTEIN JOURNAL OF NANOTECHNOLOGY, vol. 3, 10 juillet 2012 (2012-07-10), pages 501-506 décrit une méthode permettant de générer les signatures théoriques par le calcul.

Cette méthode comprend les étapes suivantes :

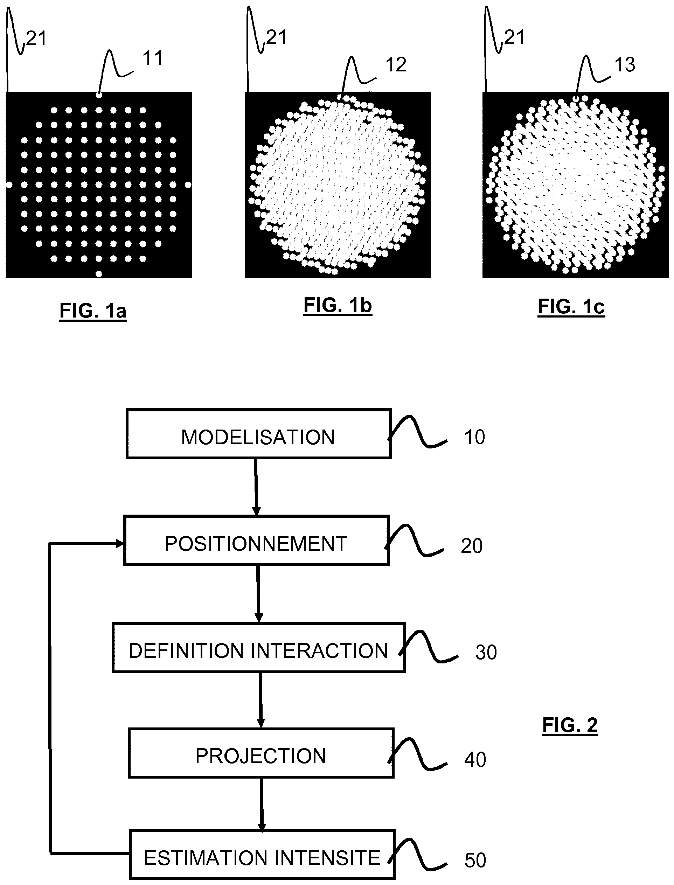

i) création dans un logiciel de modélisation 3D, d'un volume composé de mailles élémentaires, chaque maille incluant des atomes constituant la structure d'un cristal pour lequel on souhaite calculer une signature théorique,

ii) projection des atomes du cristal dans un plan et calcul de l'intensité totale de la projection (en pratique, les atomes représentés par des sphères de couleur blanche sont projetés dans un plan de couleur noir et l'intensité totale de la projection est déduite de la quantité de noir dans le plan),

iii) répétition de l'étape ii) pour différentes orientations angulaires du cube. Pour certaines orientations (cf. figure 1a), il est aisé de distinguer les alignements d'atomes en analysant leurs projections 11 dans le plan de projection 21.

Toutefois, un inconvénient de cette méthode est qu'elle peut induire des ambiguïtés. Notamment et comme illustré aux figures 1b et 1c, les intensités calculées à partir de projections 12, 13 de deux orientations très différentes peuvent s'avérer presque identiques. Par ailleurs pour certaines orientations, les profils d'intensités calculés par cette méthode peuvent présenter de nombreux artefacts par rapport aux profils d'intensités expérimentaux pour le même cristal selon les mêmes orientations.

Il peut alors s'avérer difficile de définir l'orientation du cristal par comparaison d'un profil d'intensités mesuré expérimentalement à un profil d'intensités calculé.

Quant au document XP020247229 de ROSCA D ET AL: "Area-preserving projections from hexagonal and triangular domains to the sphère and applications to électron back-scatter diffraction pattern simulations", MODELLING AND SIMULATION IN MATERIALS SCIENCE AND ENGINEERING, IOP PUBLISHING, BRISTOL, GB, vol. 21, no. 5, 11 juin 2013, page 55021, il décrit une technique de cartographie à aire égale basée sur la méthode de projection de Lambert déformant la structure cristalline.

Un but de la présente invention est de proposer un procédé de calcul de signatures théoriques permettant de pallier au moins l'un des inconvénients des méthodes précitées.

## RESUME DE L'INVENTION

A cet effet, l'invention propose un procédé de création d'une signature théorique d'un échantillon de matériau cristallin, la signature théorique correspondant à une courbe d'intensités rétrodiffusées théoriques en fonction de géométries d'acquisition selon la revendication 1.

Des aspects préférés mais non limitatifs du système selon l'invention sont les suivants :

- la structure tridimensionnelle peut être sphérique,

-

- l'étape de définition peut consister, pour un atome donné de la structure, à attribuer une valeur de niveau de gris à chaque atome en fonction de la distance entre ledit atome donné, la valeur de niveau de gris attribuée étant calculé à partir d'une fonction de décroissance de la forme suivante :

$$N(d) = \alpha.d^{\beta}$$

Avec :

  ○ N(d) : le niveau de gris à attribuer à l'atome
  ○ d : la distance entre l'atome et le plan de projection,
  ○ $\alpha$ et $\beta$ des coefficients fixes

- l'étape de calcul de la projection peut comprendre l'attribution à chaque pixel de l'image de projection :

    ○ de la valeur 0 si aucun atome n'est traversé par la direction de projection,
    ○ de la valeur associée à l'atome le plus proche du plan de projection si au moins un atome est traversé par la direction de projection,

- l'étape d'estimation de l'intensité peut comprendre l'application d'une fonction polynomiale aux valeurs de niveau de gris des pixels de l'image de projection,

- l'étape d'estimation de l'intensité comprend les sous-étapes consistant à :

    ○ sélectionner une région de l'image de projection,
    ○ sommer les valeurs niveau de gris des pixels de la région sélectionnée, et
    ○ diviser la somme obtenue par le nombre de pixels de la région sélectionnée.

- l'étape de modélisation comprend les sous-étapes consistant à :

    ○ produire un motif atomique élémentaire composé d'atomes, notamment à partir d'un logiciel de modélisation tridimensionnel,
    ○ répéter le motif atomique (notamment une pluralité de fois) selon au moins une (notamment chacune) des trois dimensions de l'espace pour générer un squelette cristallin tridimensionnel,
    ○ former une structure tridimensionnelle atomique à partir du squelette cristallin tridimensionnel.

L'invention concerne également un produit programme d'ordinateur selon la revendication 8 comprenant des instructions de code de programmation destinées à exécuter les étapes du procédé décrit ci-dessus lorsque ledit programme est exécuté sur un ordinateur.

## BREVE DESCRIPTION DES FIGURES

D'autres caractéristiques, buts et avantages de la présente invention ressortiront encore de la description qui suit, laquelle est purement illustrative et non limitative et doit être lue en regard des dessins annexés sur lesquels :

- les figures 1a, 1b, et 1c illustrent les projections dans un plan d'un cristal selon trois orientations différentes,
- la figure 2 illustre un exemple de procédé de génération de signatures théoriques
- les figures 3a, 3b, 4a, 4b illustrent des vues en coupes d'une structure cristalline cubique pour différentes orientations par rapport à un plan de projection.
- la figure 5 est une image en niveaux de gris représentant une projection dans un plan de projection des atomes d'une structure cristalline.

## DESCRIPTION DETAILLE

On va maintenant décrire plus en détail un procédé et un système de génération de signatures théoriques pour la cartographie des orientations cristallines d'un échantillon de matériau poly-cristallin en référence aux figures. Dans ces différentes figures, les éléments équivalents portent les mêmes références numériques.

### 1. Généralités

L'objectif du procédé décrit ci-après est de permettre la création de signatures théoriques obtenues par le calcul en utilisant une modélisation tridimensionnelle.

Une signature théorique est une courbe représentant une intensité théorique en fonction d'une géométrie d'acquisition pour un matériau d'orientation cristallographique connue.

Les signatures théoriques peuvent être utilisées pour déterminer l'orientation cristalline de chaque grain d'un échantillon en matériau poly-cristallin, par comparaison desdites signatures théoriques avec un profil d'intensités mesurées.

Un profil d'intensités associé à un point de l'échantillon est une courbe représentant l'intensité mesurée par un détecteur p en fonction d'une géométrie d'acquisition. Un tel profil d'intensités est obtenu en acquérant une série d'images de l'échantillon à l'aide d'un dispositif d'acquisition pour différentes géométries d'acquisition.

La géométrie d'acquisition correspond pour chaque image à la position relative de l'échantillon par rapport à un dispositif d'acquisition utilisée pour mesurer l'intensité de l'échantillon.

La finalité du procédé selon l'invention est de générer une signature théorique (ou profil théorique) pour un matériau donné et une orientation cristalline donnée tel que le produirait sa mesure expérimentale.

Pour comprendre les différentes caractéristiques du procédé de création de signatures théoriques, on va brièvement rappeler les étapes de mesure expérimentale d'un profil d'intensités d'un point de la surface d'un matériau à analyser.

En effet, les choix techniques effectués dans le cadre du procédé de création de signatures théoriques sont directement en relation avec les phénomènes physiques régissant l'acquisition et le traitement de données expérimentales.

### 2. Bref rappel des principes relatifs à la mesure expérimentale de profils d'intensité

Un procédé de mesure expérimentale du profil d'intensités d'un échantillon poly-cristallin comprend deux étapes principales :

- l'acquisition d'une série d'images de l'échantillon pour différentes géométries d'acquisition, et
- le traitement des images acquises pour en déduire un profil d'intensités en chaque point de l'échantillon.

### 2.1. Acquisition

L'acquisition d'une série d'images est mise en oeuvre dans un dispositif d'acquisition adapté pour :

- émettre un faisceau de particules chargées à partir d'une source, et pour
- collecter un signal en provenance de l'échantillon sur un détecteur.

Le dispositif d'acquisition est par exemple un microscope électronique à balayage ou à sonde ionique focalisée. Le principe d'acquisition d'une image à l'aide du dispositif d'acquisition est le suivant.

La source génère un faisceau primaire de particules chargées qui percute la surface d'un échantillon. En conséquence, un signal (par exemple des particules chargées secondaires et rétrodiffusées) est émis par la surface de l'échantillon et les trajectoires respectives des particules constituant le signal suivent en sens inverse la direction originale du faisceau primaire, qui est perpendiculaire à la surface de l'échantillon (connue sous le nom de direction axiale) et avec des angles divergeant par rapport à celle-ci.

Lesdites particules sont collectées par le détecteur, placé au-dessus de l'échantillon. Le détecteur génère un signal à partir des particules collectées. Ce signal est traité pour créer un pixel d'une image du matériau.

Chaque image est obtenue pour une géométrie d'acquisition (i.e. position relative de la source et du détecteur par rapport à l'échantillon) respective. Cette image est représentative des intensités mesurées par le détecteur lors de l'interaction du faisceau de particules chargées avec les atomes de l'échantillon. Ces intensités mesurées varient en fonction de l'orientation de la maille cristalline par rapport au faisceau, du matériau et des conditions expérimentales (géométrie d'acquisition notamment).

Pour obtenir une série d'images, on réitère les opérations décrites ci-dessus pour différentes géométries d'acquisition.

### 2.2. Traitement

Le traitement de la série d'images est mis en oeuvre dans un dispositif de traitement adapté pour calculer un profil d'intensités en chaque point de la surface du matériau à partir de la série d'images.

Chaque image acquise est composée de pixels dont les niveaux de gris - compris entre 0 et 255 - sont représentatifs d'intensités électroniques reçues par le détecteur.

Chaque pixel est représentatif de l'intensité d'un point correspondant de l'échantillon, cette intensité dépendant de l'orientation cristalline au point considéré et de l'angle qui définit la géométrie d'acquisition (i.e. positions de la source et du détecteur par rapport à l'échantillon).

Ainsi, l'intensité d'un même point de l'échantillon varie dans les images de la série d'images.

Pour chaque point de l'échantillon, les pixels homologues des différentes images sont regroupés, et leurs valeurs sont reportées dans un graphique représentant l'intensité du point de l'échantillon en fonction de la géométrie d'acquisition.

### 3. Procédé

On va maintenant décrire plus en détail un exemple de procédé de génération de signatures théoriques. Le procédé peut comprendre les phases principales suivantes :

- une phase de modélisation 10 tridimensionnelle au niveau atomique d'un échantillon du matériau,
- une phase de positionnement 20 du modèle tridimensionnel par rapport à un plan perpendiculaire au faisceau de particules chargées, ledit plan - appelé dans la suite « plan de projection » - représentant la position du détecteur dans le dispositif d'acquisition,
- une phase de définition 30 pour chaque atome 24 du modèle tridimensionnel d'un niveau d'interaction théorique avec le faisceau de particules chargées en fonction de la modélisation,
- une phase de projection orthogonale 40 du modèle tridimensionnel sur un plan de projection en tenant compte des niveaux d'interaction et de la visibilité des atomes du modèle,
- une phase d'évaluation 50 de l'intensité théorique par analyse de la projection orthogonale produite.

### 3.1. Modélisation tridimensionnelle

Une phase 10 du procédé consiste à modéliser le squelette atomique du matériau poly-cristallin pour lequel on souhaite générer une signature théorique. Contrairement au procédé selon la présente invention, la méthode décrite dans le document XP055266074 ne comprend pas d'étape de modélisation pour calculer des signatures théoriques. En effet dans XP055266074, les signatures théoriques sont calculées en utilisant des profils expérimentaux. Le fait de modéliser le squelette atomique du matériau poly-cristallin pour lequel on souhaite générer une signature théorique permet de limiter les coûts et temps associés à la génération des signatures théoriques. Dans une première étape, un motif atomique élémentaire composé d'atomes 24 - ou « *maille cristalline* » - est produit à l'aide d'un logiciel de modélisation tridimensionnel. Chaque atome 24 est représenté par une sphère, les tailles et positions des différents atomes 24 étant déterminées de sorte à respecter des données théoriques et expérimentales relatives à la cristallographie du matériau.

Le motif élémentaire est ensuite répété périodiquement une pluralité de fois dans les trois dimensions de l'espace pour former un squelette cristallin tridimensionnel représentatif du matériau pour lequel on souhaite générer la signature théorique. Les squelettes cristallins ainsi obtenus peuvent présenter différentes formes, telles qu'une forme parallélépipédique, cubique, hexagonale, etc.

Une étape de la modélisation consiste à sélectionner les atomes 24 du squelette contenus dans un volume de sélection présentant une symétrie centrale de révolution tel qu'une sphère. Ceci permet de normaliser la profondeur d'analyse du matériau considéré. Plus précisément, ceci permet de rendre la profondeur d'analyse du matériau indépendante de la géométrie d'acquisition.

En effet, afin de construire une signature théorique des intensités d'un matériau cristallin d'orientation cristalline connue, il est nécessaire de déterminer le niveau d'intensité théorique de chaque atome 24 pour différentes géométries d'acquisition.

Pour ce faire, il est préférable que la profondeur d'analyse (i.e. distance entre le plan de projection 21 et l'atome 24 du matériau le plus éloigné dudit plan selon une direction de projection 23) reste approximativement constante quelle que soit la géométrie d'acquisition.

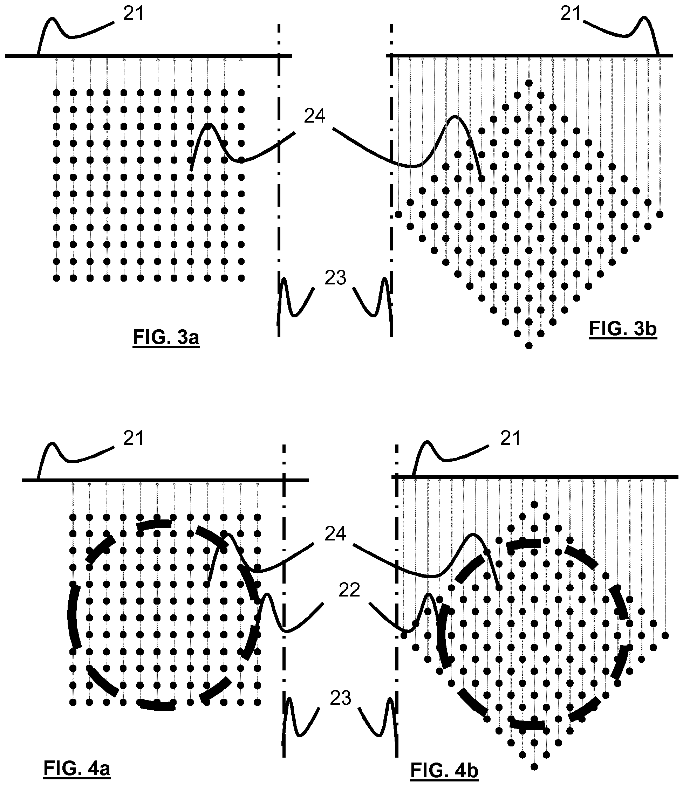

Ce n'est pas le cas lorsque le squelette est par exemple cubique. En effet, lors d'une rotation d'un squelette cristallin cubique, la profondeur d'analyse considérée change. Ceci est illustré à la figure 3 où un même squelette cristallin cubique est représenté pour :

- une première géométrie d'acquisition (figure 3a) et
- une deuxième géométrie d'acquisition (figure 3b) correspondant à une rotation du squelette d'un angle de 45° par rapport à la première géométrie d'acquisition.

Dans le cas de la figure 3a, la profondeur d'analyse est constante sur toute la projection. Dans le cas de la figure 3b, la profondeur d'analyse varie entre le centre et la périphérie du squelette cristallin cubique.

Le fait que la profondeur d'analyse soit différente entre les première et deuxième géométries d'acquisition introduit une instabilité mathématique dans l'estimation de l'intensité pour chacune de ces géométries d'acquisition.

Pour rendre la profondeur d'analyse indépendante de la géométrie d'acquisition de la structure cristalline, les inventeurs proposent de ne considérer (lors des phases suivantes du procédé) que les atomes 24 contenus dans une sphère 22 inscrite dans le squelette cristallin, comme illustré aux figures 4a et 4b.

C'est pourquoi la phase de modélisation peut comprendre une étape consistant à former une structure cristalline d'intérêt à partir du squelette cristallin, la structure comprenant au moins une maille cristalline et étant contenue dans un volume présentant une symétrie de révolution de sorte que la distance entre un centre de la structure et les atomes 24 disposés à la périphérie de la structure est sensiblement constante.

On obtient ainsi une structure atomique tridimensionnelle sphérique. On entend, dans le cadre de la présente invention, par structure atomique « *sphérique* », une structure dans laquelle la distance entre :

- la paroi de la plus petite sphère dans laquelle ladite structure est inscrite, et
- chaque atome 24 de la périphérie de la structure

est inférieure à deux fois la distance entre deux atomes adjacents de la structure.

Ainsi, quelle que soit la géométrie d'acquisition choisie, la profondeur reste approximativement la même d'une géométrie d'acquisition à l'autre (cf. figures 4a et 4b).

Une fois la phase de modélisation terminée, les phases suivantes du procédé (i.e. phases de positionnement, de définition d'un niveau d'interaction, de projection et d'estimation) sont itérées pour différentes positions de la structure cristalline par rapport au plan de projection 21.

La phase de positionnement consiste à agencer la structure tridimensionnelle modélisée par rapport au plan de projection 21 selon la géométrie d'acquisition désirée. Cette phase classique en elle-même ne sera pas décrite plus en détails dans la suite.

### 3.2. *Niveaux d'interaction*

Une autre phase du procédé consiste, pour chaque atome 24 de la structure, à définir un niveau d'interaction théorique entre ledit atome 24 et le faisceau de particules chargées, ce niveau d'interaction dépendant de la position de l'atome 24 par rapport au plan de projection (et donc du positionnement de la structure).

Cette phase permet de limiter les risques de saturation lors de la phase ultérieure de projection de la structure sur le plan de projection 21.

Le phénomène de saturation peut être expliqué de la façon suivante en référence aux figures 1a à 1c.

Pour certaines géométries d'acquisition telles qu'illustrées à la figure 1a, il est aisé de distinguer les alignements d'atomes 24 en analysant la projection de la structure cristalline sphérique sur le plan de projection 21. En revanche, lorsque les atomes 24 ne présentent pas d'alignement marqué, l'analyse devient plus difficile.

En effet, la projection de la structure selon deux géométries d'acquisition très différentes mais ne présentant pas d'alignement marqués peut être presque identique car totalement saturée, notamment au centre de la structure où la profondeur d'analyse est la plus grande (cf. figures 1b et 1c).

Or, le niveau d'intensité constaté expérimentalement serait lui bien différent pour ces deux géométries d'acquisition. Ce phénomène est d'autant plus marqué que le nombre d'atomes 24 dans la structure augmente. Dans le cas limite d'un très grand nombre d'atomes 24, la projection serait totalement saturée dès le moindre défaut d'alignement.

Cela est contre-intuitif et problématique car une modélisation d'un plus grand nombre d'atomes 24 devrait accroître la précision du modèle théorique et non la dégrader.

Afin d'éviter ce phénomène de saturation, les inventeurs proposent de définir pour chaque atome 24 de la structure tridimensionnel un niveau d'interaction qui est une fonction décroissante de la distance de l'atome au plan de projection 21.

D'un point de vue physique, cette fonction représente la probabilité d'interaction du faisceau de particules chargées émis par la source avec l'atome 24 considéré. Ainsi, les atomes 24 les plus proches du plan de projection 21 sont considérés comme interagissant fortement avec le faisceau de particules chargées, et produisant une forte intensité. En d'autres termes, dans le cas d'un faisceau d'ions par exemple, les atomes 24 proches du plan de projection 21 (et correspondant donc à des atomes 24 du matériau proche de la source et du détecteur) sont considérés comme produisant une grande quantité de particules chargées secondaires et rétrodiffusées. A contrario, les atomes 24 en profondeur (i.e. très éloignés du plan de projection 21 correspondant au plan contenant le détecteur) sont considérés comme interagissant faiblement avec le faisceau et produisant donc moins d'électrons. Ceci est conforme à ce qui est constaté expérimentalement.

La fonction de décroissance peut être de la forme suivante :

$$N(d) = \alpha.d^{\beta}$$

avec *N(d)* le niveau d'intensité d'un atome à la distance *d* du plan de projection, $\alpha$ et $\beta$ dépendants du matériau et du protocole expérimental.

Ainsi, même en présence d'un échantillon modélisé avec un très grand nombre d'atomes 24, les atomes 24 les plus en profondeur (i.e. les atomes 24 les plus éloignés du plan de projection 21 représentatifs des atomes les plus éloignés de la source et du détecteur) joueront un rôle faible et ne satureront pas la projection.

En pratique pour un atome 24 donné, la définition de son niveau d'interaction théorique se traduit par l'attribution d'un niveau de gris « N » à l'atome. Ce niveau de gris peut être calculé en utilisant la fonction de décroissance précitée ou en utilisant une table de correspondance ou en mettant en oeuvre tout type de correspondance connue de l'homme du métier.

Par exemple si l'on considère des premier et deuxième plans parallèles au plan de projection 21 et positionnés à des distances successives croissantes du plan de projection 21 de sorte que le premier plan soit plus proche du plan de projection 21 que le deuxième plan, alors :

- la valeur de niveau de gris « 255 » (correspondant au blanc) peut être attribuée aux atomes 24 de la structure contenus dans un volume compris entre le plan de projection 21 et le premier plan,

- la valeur de niveau de gris « 127 » (correspondant au gris) peut être attribuée aux atomes 24 de la structure contenus dans un volume compris entre les premiers et deuxième plans,

- la valeur de niveau de gris « 0 » (correspondant au noir) peut être attribuée aux autres atomes 24 de la structure (i.e. atomes situés au-delà du deuxième plan relativement au plan de projection).

### 3.3. Projection

Une autre phase du procédé consiste à projeter les atomes 24 de la structure dans le plan de projection 21. Le plan de projection 21 correspond au plan dans lequel est contenu le détecteur.

Lors de la projection des sphères sur le plan de projection 21, celles-ci forment des disques ayant chacun un niveau d'intensité calculé en fonction de la distance de la sphère au plan de projection 21 lors de la phase de définition des niveaux d'interaction.

Ce niveau d'interaction peut être visualisé sous la forme d'un niveau de gris, l'interaction la plus forte étant représentée en blanc (valeur 255) et la moins forte en noir (0) si les pixels du plan de projection 21 sont supposés initialisés à 0 (noir).

Cependant, les atomes 24 de la structure localisés en profondeur (i.e. les atomes 24 les plus éloignés du plan de projection 21) n'interagissent avec le faisceau que si ce dernier n'a pas déjà interagi avec un atome 24 situé au-dessus de lui par rapport au plan de projection 21. Il est donc préférable de gérer la « visibilité » des atomes par le faisceau lors de la projection.

Pour chaque atome 24, la projection est donc réalisée en n'affichant que la partie de l'atome 24 qui n'est pas masquée par un ou plusieurs atomes 24 situés entre elle et le plan de projection 21 selon la direction de projection 23.

Différentes techniques de projection peuvent être employées pour tenir compte de ce critère de projection.

Par exemple, tous les atomes 24 peuvent être projetés sur le plan de projection de l'atome 24 du plus éloignés au plus proche du plan de projection, la valeur attribuée à chaque pixel du plan de projection étant systématiquement remplacée par la valeur associée à l'atome 24 le plus proche du plan de projection selon la direction de projection 23.

### 3.4. Evaluation

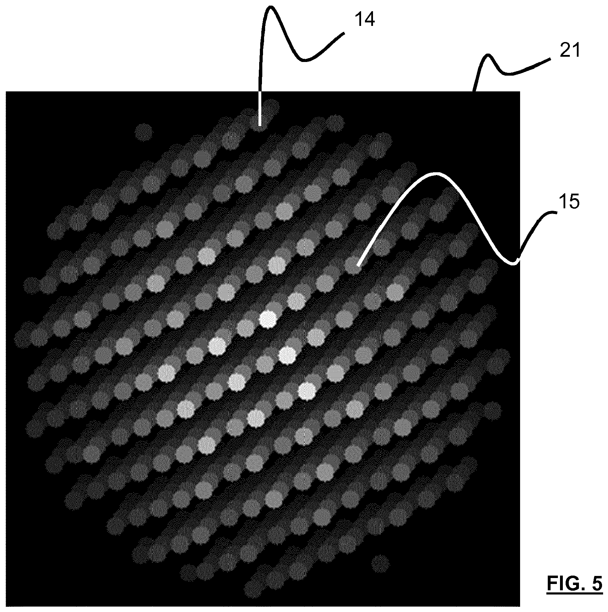

La projection peut être visualisée sous la forme d'une image en niveaux de gris, les atomes 24 ayant une interaction forte avec le faisceau étant en blanc et ceux ayant une interaction plus faible de couleur plus sombre. On a illustré à la figure 5 une telle image.

Chaque portion visible du projeté de chaque atome 24 contribue à hauteur de son niveau d'interaction et de la surface visible projetée à l'intensité théorique finale. Cela peut s'interpréter graphiquement comme une fonction de la « luminosité » totale de la projection visualisée sous la forme d'une image en niveaux de gris.

On calcule l'intensité finale en fonction de la somme des valeurs de l'ensemble des pixels de l'image. Plus précisément, l'intensité finale est par exemple calculée en utilisant une fonction polynomiale, telle que le carré de la moyenne des valeurs. L'intensité ainsi calculé pour une géométrie d'acquisition donnée est reportée dans un graphique représentant l'intensité théorique en fonction de la géométrie d'acquisition.

Pour obtenir une signature théorique, on réitère les phases de définition des niveaux d'interaction théorique avec le faisceau de particules chargées, de projection, et d'évaluation pour une pluralité de géométries d'acquisition différentes. Cela se traduit par une modification de la position du plan de projection par rapport à la modélisation mise en oeuvre lors de l'étape de modélisation.

### 3.5. Améliorations à la phase d'évaluation

Le projeté du modèle sphérique forme un disque dont le bord extérieur est formé d'une épaisseur assez faible d'atomes 24. Cela ne pose pas de problème car l'épaisseur de l'échantillon est de même répartition quelle que soit la géométrie d'acquisition étudiée.

Il est cependant possible de n'exploiter qu'une partie de l'image de projection (obtenue lors de la phase de projection dans le plan de projection) le tout en conservant une bonne approximation de l'intensité attendue et ce afin de limiter la charge de calcul lors de l'implémentation informatique de la méthode.

Dans cette optique, trois méthodes de réduction exposées ci-après ont été étudiées :

- le carré inscrit : l'évaluation des contributions ne se fait que pour les éléments de projection situés dans un carré inscrit dans le disque de projection ; les résultats obtenus sont très proches étant donnée la faible pertinence des projetés en bordure de disque et permettent une économie de traitement significative ;

- l'élément unitaire de pavage : il est possible de calculer la projection d'une (ou plusieurs) maille(s) formant un pavage de l'espace dans l'image finale ; cela consiste à ne retenir comme zone d'analyse que l'enveloppe convexe de la projection de cette (ou ces) maille(s) ; dans le cas du TiN, il s'agit du projeté d'un cube ; cette projection représente une approximation d'un pavé sur le plan de projection et suffit à déduire une intensité théorique de bonne qualité ; le coût de calcul de l'enveloppe convexe est moindre que l'économie réalisée en surface d'analyse, l'optimisation est donc rentable.

- Approximation du pavé unitaire : plutôt que de réduire l'espace d'analyse à un pavé unitaire, on peut la réduire au carré dans lequel s'inscrit le pavé unitaire ; cette réduction ne dégrade que faiblement la qualité des intensités estimées et permet de s'affranchir du calcul de l'enveloppe convexe de projection.

Afin de limiter les temps de traitement, on remarque qu'il est possible d'exclure du calcul de projection les atomes 24 dont le projeté du centre de trouve à plus d'un rayon atomique de distance de la zone analysée sur le plan de projection, Ce qui permet d'emblée de ne pas se préoccuper des disques et des chevauchements des atomes 24 qui n'auront pas d'incidence sur le résultat.

*4. Système pour la mise en oeuvre du procédé de génération de signatures théoriques*

Le procédé de génération de signatures théoriques peut être mis en oeuvre dans un système de traitement incluant :

- des moyens de saisie - tels qu'un clavier ou une souris - pour permettre à un utilisateur le positionnement des atomes 24 d'une maille cristalline lors de la phase de modélisation,
- des moyens d'affichage - tels qu'un écran - pour permettre la visualisation des images de projection ou de la signature théorique, et
- des moyens de traitement - tels qu'un processeur ou un calculateur ou un microcontrôleur ou tout autre circuit programmable - pour estimer les signatures théoriques.

Le système de traitement est par exemple un/des ordinateur(s), un/des micro-ordinateur(s), ou d'autres dispositifs connus de l'homme du métier tels qu'une station de travail.

Les moyens de traitement sont de préférence couplés à une (ou plusieurs) mémoire(s) qui peu(ven)t être intégrée(s) au ou séparée(s) des moyens de traitement. La mémoire peut être une mémoire ROM/RAM, une clé USB, une mémoire d'un serveur central. Cette mémoire permet de stocker un produit programme d'ordinateur comprenant des instructions de code de programmation destinées à exécuter les étapes du procédé de génération de signatures théoriques selon les revendications 1 à 7.

*5. Conclusions*

On a décrit un procédé et un produit programme d'ordinateur pour la génération de signatures théoriques utilisables pour cartographier les orientations cristallines d'un matériau à analyser.

Le procédé comprend notamment les phases suivantes :

- Modéliser la structure atomique de l'échantillon de matériau selon une forme sphérique,
- Pour chaque point de la signature théorique :

  ◦ Positionner la structure sphérique selon la géométrie d'acquisition désirée en déplaçant la structure sphérique par rapport au plan de projection, et définir la contribution de chaque atome 24 de la structure sphérique
  ◦ Calculer la projection des atomes 24 contribuant au résultat,
  ◦ Evaluer le résultat en fonction de la projection obtenue.

Contrairement aux méthodes de calcul de signatures théoriques antérieures, le procédé selon l'invention tient compte de phénomènes physiques pour s'affranchir des erreurs de calcul des méthodes antérieures.

Notamment, en pondérant chaque atome 24 par un coefficient représentatif de sa visibilité, le procédé selon l'invention tient compte du fait que la profondeur de pénétration du faisceau de particules chargées est limitée à une épaisseur maximum du matériau analysé.

Par ailleurs, en créant une structure cristalline d'intérêt dont les atomes 24 situés à la périphérie sont inscrits dans un volume présentant une symétrie centrale de révolution, le procédé permet de s'affranchir d'effets de bords indésirables liés à la rotation de la structure.

Enfin en ne conservant dans la projection, que les portions d'atomes non recouvertes par un atome 24 situé à une distance inférieure du plan de projection, le procédé selon l'invention permet de distinguer :

- le rayonnement rétrodiffusé ayant été reçu par le détecteur
- du rayonnement rétrodiffusé ayant été bloqué par un atome 24 situé sur le chemin de parcours dudit rayonnement rétrodiffusé.

On éviter les risques de cumul de contributions entre les atomes 24 aux différentes profondeurs.

Le procédé décrit précédemment a été évalué sur des échantillons de nitrure de titane et de fer, de structure cristalline cubique, mais est généralisable à d'autres structures cristallines. Notamment, le procédé décrit précédemment peut être utilisé pour générer des signatures théoriques pour tout type de matériau polycristallin tel qu'un métal, une céramique.

Le lecteur aura compris que de nombreuses modifications peuvent être apportées au procédé décrit ci-dessus sans sortir matériellement des nouveaux enseignements présentés ici.

Par exemple, le procédé peut être utilisé pour déterminer les signatures théoriques d'un matériau monocristallin.

Il est donc bien évident que les exemples qui viennent d'être donnés ne sont que des illustrations en aucun cas limitatives.

**Revendications**

1. Procédé de création d'une signature théorique d'un échantillon de matériau cristallin, la signature théorique correspondant à une courbe d'intensités rétrodiffusées théoriques en fonction de géométries d'acquisition, **caractérisé en ce que** le procédé comprend les étapes suivantes :

   - Modélisation (10) d'une structure tridimensionnelle atomique de l'échantillon, la structure comprenant au moins une maille cristalline, ladite étape de modélisation comprenant une sous-étape consistant à sélectionner des atomes (24) de l'au moins une maille cristalline contenus dans un volume de sélection, le volume de sélection présentant une symétrie de révolution de sorte que la distance entre un centre de la structure et les atomes (24) disposés à la périphérie de la structure est sensiblement constante,
   - Puis pour chaque géométrie d'acquisition :

      o Positionnement (20) de la structure selon la géométrie d'acquisition désirée en déplaçant la structure tridimensionnelle par rapport à un plan de projection,
      ◦ définition (30) d'un niveau d'interaction pour chaque atome, ladite étape consistant à allouer à chaque atome un coefficient représentatif d'une contribution théorique de l'atome à l'intensité rétrodiffusée, ledit coefficient consistant en une valeur de niveau de gris attribuée à chaque atome de la structure en fonction :

         ▪ de la distance entre ledit atome donné et le plan de projection, et/ou
         ▪ du nombre d'atomes situés entre ledit atome donné et le plan de projection,

      ◦ Calcul (40) de la projection des atomes (24) de la structure dans le plan de projection pour obtenir une image de projection,
      ◦ Estimation (50) de l'intensité rétrodiffusée à partir de l'image de projection,

   - Génération de la signature théorique à partir d'une pluralité d'intensités rétrodiffusées théoriques estimées.

2. Procédé de création selon la revendication 1, dans lequel la structure tridimensionnelle est sphérique.

3. Procédé selon l'une quelconque des revendications 1 ou 2, dans lequel l'étape de définition (30) consiste, pour un atome donné de la structure, à attribuer une valeur de niveau de gris à chaque atome en fonction de la distance entre ledit atome donné, la valeur de niveau de gris attribuée étant calculé à partir d'une fonction de décroissance de la forme suivante :

$$N(d) = \alpha . d^\beta$$

Avec :

   - $N(d)$ : le niveau de gris à attribuer à l'atome
   - $d$ : la distance entre l'atome et le plan de projection,
   - $\alpha$ et $\beta$ des coefficients fixes.

4. Procédé selon l'une quelconque des revendications 1 à 3, dans lequel l'étape de calcul de la projection comprend l'attribution à chaque pixel de l'image de projection :

   - de la valeur 0 si aucun atome n'est traversé par la direction de projection (23),
   - de la valeur associée à l'atome le plus proche du plan de projection (21) si au moins un atome est traversé par la direction de projection (23).

5. Procédé selon l'une quelconque des revendications 1 à 4, dans lequel l'étape d'estimation de l'intensité comprend l'application d'une fonction polynomiale aux valeurs de niveau de gris des pixels de l'image de projection.

6. Procédé selon l'une quelconque des revendications 1 à 4, dans lequel l'étape d'estimation de l'intensité comprend les sous-étapes consistant à :

   - sélectionner une région de l'image de projection,
   - sommer les valeurs niveau de gris des pixels de la région sélectionnée, et
   - diviser la somme obtenue par le nombre de pixels de la région sélectionnée.

7. Procédé selon l'une quelconque des revendications précédentes, dans lequel l'étape de modélisation comprend les sous-étapes consistant à :

   - produire la maille cristalline, notamment à partir d'un logiciel de modélisation tridimensionnel,
   - répéter la maille cristalline selon au moins une (notamment chacune) des trois dimensions de l'espace pour générer un squelette cristallin tridimensionnel,
   - former la structure tridimensionnelle atomique à partir du squelette cristallin tridimensionnel.

8. Produit programme d'ordinateur comprenant des instructions de code de programmation destinées à exécuter les étapes du procédé selon l'une quelconque des revendications 1 à 8 lorsque ledit programme est exécuté sur un ordinateur.

**Patentansprüche**

1. Verfahren zur Erstellung einer theoretischen Signatur einer Probe aus kristallinem Material, wobei die theoretische Signatur einer Kurve von theoretischen Rückstreuintensitäten in Abhängigkeit von Erfassungsgeometrien entspricht, **dadurch gekennzeichnet, dass** das Verfahren die folgenden Schritte umfasst:

- Modellieren (10) einer dreidimensionalen atomaren Struktur der Probe, wobei die Struktur mindestens ein Kristallgitter umfasst, wobei der Schritt des Modellierens einen Teilschritt umfasst, der darin besteht, Atome (24) des mindestens einen Kristallgitters auszuwählen, die in einem Auswahlvolumen enthalten sind, wobei das Auswahlvolumen eine Rotationssymmetrie aufweist, so dass der Abstand zwischen einem Zentrum der Struktur und den Atomen (24), die an der Peripherie der Struktur angeordnet sind, im Wesentlichen konstant ist,
- anschließend für jede Erfassungsgeometrie:

o Positionieren (20) der Struktur gemäß der gewünschten Erfassungsgeometrie durch Verschieben der dreidimensionalen Struktur relativ zu einer Projektionsebene,
o Definieren (30) eines Wechselwirkungsniveaus für jedes Atom, wobei dieser Schritt darin besteht, jedem Atom einen Koeffizienten zuzuweisen, der für einen theoretischen Beitrag des Atoms zu der Rückstreuintensität repräsentativ ist, wobei dieser Koeffizient aus einem Graustufenwert besteht, der jedem Atom der Struktur zugewiesen wird in Abhängigkeit von:

■ dem Abstand zwischen dem gegebenen Atom und der Projektionsebene, und/oder
■ der Anzahl der Atome zwischen dem gegebenen Atom und der Projektionsebene,

o Berechnen (40) der Projektion der Atome (24) der Struktur in die Projektionsebene, um ein Projektionsbild zu erhalten,
o Schätzen (50) der Rückstreuintensität ausgehend von dem Projektionsbild,

- Generieren der theoretischen Signatur aus einer Vielzahl von geschätzten theoretischen Rückstreuintensitäten.

2. Verfahren nach Anspruch 1, wobei die dreidimensionale Struktur kugelförmig ist.

3. Verfahren nach einem der Ansprüche 1 oder 2, wobei der Schritt des Definierens (30) für ein gegebenes Atom der Struktur darin besteht, jedem Atom in Abhängigkeit von dem Abstand zwischen dem gegebenen Atom einen Graustufenwert zuzuweisen, wobei der zugewiesene Graustufenwert ausgehend von einer Zerfallsfunktion der folgenden Form berechnet wird:

$$N(d) = \alpha . d^{\beta}$$

mit:

- $N(d)$: dem Atom zuzuordnende Graustufe
- $d$: Abstand zwischen dem Atom und der Projektionsebene,
- $\alpha$ und $\beta$: feste Koeffizienten.

4. Verfahren nach einem der Ansprüche 1 bis 3, wobei der Schritt des Berechnens der Projektion die Zuweisung zu jedem Pixel des Projektionsbildes umfasst von:

- dem Wert 0, wenn kein Atom von der Projektionsrichtung (23) durchquert wird,
- dem Wert, der dem der Projektionsebene (21) am nächsten liegenden Atom zugeordnet ist, wenn mindestens ein Atom von der Projektionsrichtung (23) durchquert wird.

5. Verfahren nach einem der Ansprüche 1 bis 4, wobei der Schritt des Schätzens der Intensität das Anwenden einer Polynomfunktion auf die Graustufenwerte der Pixel des Projektionsbildes umfasst.

6. Verfahren nach einem der Ansprüche 1 bis 4, wobei der Schritt des Schätzens der Intensität die folgenden Teilschritte umfasst:

- Auswählen eines Bereich des Projektionsbildes,
- Summieren der Graustufenwerte der Pixel des ausgewählten Bereichs, und
- Dividieren der erhaltenen Summe durch die Anzahl der Pixel des ausgewählten Bereichs.

7. Verfahren nach einem der vorstehenden Ansprüche, wobei der Schritt des Modellierens die folgenden Teilschritte umfasst:

- Herstellen des Kristallgitters, insbesondere mithilfe einer Software zur dreidimensionalen Modellierung,
- Wiederholen des Kristallgitters in mindestens einer (insbesondere jeder) der drei Dimensionen des Raumes, um ein dreidimensionales Kristallgerüst zu erzeugen,
- Bilden der dreidimensionalen atomaren Struktur aus dem dreidimensionalen Kristallgerüst.

8. Computerprogrammprodukt mit Programmcodebefehlen für die Ausführung der Schritte des Verfahrens nach einem der Ansprüche 1 bis 7, wenn dieses Programm auf einem Computer ausgeführt wird.

**Claims**

1. A method for creating a theoretical signature of a crystalline material sample, the theoretical signature corresponding to a curve of theoretical backscattered intensities as a function of acquisition geometries, **characterised in that** the method comprises the following steps:

   - modelling (10) a three-dimensional atomic structure of the sample, the structure comprising at least one crystal lattice, said modelling step comprising a sub-step consisting of selecting atoms (24) of at least one crystal lattice and contained in a selection volume, the selection volume having a symmetry of rotation such that the distance between a centre of the structure and the atoms (24) arranged at the periphery of the structure is substantially constant;
   - then, for each acquisition geometry:

     ∘ positioning (20) the structure according to the desired acquisition geometry by moving the spherical structure relative to the projection plane;
     ∘ defining (30) a level of interaction for each atom, said step consisting of allocating, to each atom, a coefficient representative of a theoretical contribution of the atom to the backscattered intensity, said coefficient consisting of a greyscale value attributed to each atom of the structure according as a function of:

       ▪ the distance between said given atom and the projection plane, and/or
       ▪ the number of atoms located between said given atom and the projection plane,

     ∘ calculating (40) the projection of the atoms (24) of the structure in the projection plane in order to obtain a projection image;
     ∘ estimating (50) the backscattered intensity on the basis of the projection image; and

   - generating the theoretical signature on the basis of a plurality of estimated theoretical backscattered intensities.

2. The method according to claim 1, wherein the three-dimensional structure is spherical.

3. The method according to either of claims 1 or 2, wherein the definition step (30) consists, for a given atom of the structure, in attributing a greyscale value to each atom as a function of the distance to said given atom, the attributed greyscale value being calculated on the basis of a decay function of the following form:

$$N(d) = \alpha . d^{\beta}$$

where:

   - $N(d)$: the greyscale to be attributed to the atom
   - $d$: the distance between the atom and the projection plane,
   - $\alpha$ and $\beta$ are fixed coefficients.

4. The method according to any one of claims 1 to 3, wherein the step of calculating the projection comprises attributing to each pixel of the projection image:

   - the value 0 if no atom is crossed by the projection direction (23),
   - the value associated with the atom closest to the projection plane (21) if at least one atom is crossed by the projection direction (23).

5. The method according to any one of claims 1 to 4, wherein the step of estimating the intensity comprises the application of a polynomial function to the greyscale values of the pixels of the projection image.

6. The method according to any one of claims 1 to 4, wherein the step of estimating the intensity comprises the sub-steps consisting of:

   - selecting a region of the projection image,
   - summing the greyscale values of the pixels of the selected region, and
   - dividing the sum obtained by the number of pixels of the selected region.

7. The method according to any one of the preceding claims, wherein the modelling step comprises the sub-steps consisting of:

 - producing the crystal lattice, in particular on the basis of a three-dimensional modelling software,

 - repeating the crystal lattice in at least one (in particular each) of the three spatial dimensions in order to generate a three-dimensional crystal skeleton,

 - forming the three-dimensional atomic structure on the basis of the three-dimensional crystal skeleton.

8. A computer program product comprising program code instructions for executing the steps of the method according to any one of claims 1 to 7 when said program is executed on a computer.

**FIG. 1a**

**FIG. 1b**

**FIG. 1c**

| MODELISATION | 10 |

| POSITIONNEMENT | 20 |

| DEFINITION INTERACTION | 30 |

**FIG. 2**

| PROJECTION | 40 |

| ESTIMATION INTENSITE | 50 |

FIG. 3a

FIG. 3b

FIG. 4a

FIG. 4b

FIG. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2015113898 A

**Littérature non-brevet citée dans la description**

- **C. LANGLOIS et al.** Crystal orientation mapping via ion channeling: An alternative to EBSD. *ULTRAMICROSCOPY,* 05 Juin 2015, vol. 157, 65-72
- **VASILISA VELIGURA et al.** Channeling in hélium ion microscopy: Mapping of crystal orientation. *BEILSTEIN JOURNAL OF NANOTECHNOLOGY,* 10 Juillet 2012, vol. 3, 501-506
- Area-preserving projections from hexagonal and triangular domains to the sphère and applications to électron back-scatter diffraction pattern simulations. **ROSCA D et al.** MATERIALS SCIENCE AND ENGINEERING. IOP PUBLISHING, 11 Juin 2013, vol. 21, 55021